# EUROPEAN PATENT APPLICATION

(11) **EP 3 421 027 A1**
(43) Date of publication of application: **02.01.2019**
(21) Application number: 18180456.8
(22) Date of filing: 28.06.2018
(51) Int. Cl.: A61H 33/06, A61H 33/00, H05B 1/02

(54) **FIRE PREVENTION SYSTEM FOR A SAUNA**

(30) Priority: 29.06.2017 FI 20175617
(71) Applicant: Narvi Oy, 27230 Lappi (FI)
(72) Inventor: NUMMELA, Manu, 27600 Hinnerjoki (FI); LÄHDEMÄKI, Heimo, 20100 Turku (FI)
(74) Representative: Boco IP Oy Ab

(57) **Abstract**

The invention is directed to a method for fire prevention in a sauna comprising the steps of monitoring a rise of heat radiation from a sauna heater, comparing the rise of the heat radiation to a normal set heat radiation rise curve, determining whether the rise of the heat radiation of the sauna heater deviates from a normal rise in heat radiation, and switching the sauna heater off if the rise of the heat radiation deviates from the normal rise. The invention is further directed to a system for carrying out said method.

## Description

### Field of the invention

The present invention relates sauna heaters and especially to a system, method and a computer program product for detecting and preventing fires caused by the sauna heater, defined in preambles of the independent claims.

### Background of the invention

Traditionally detection of fires and file prevention is saunas has been solved by smoke detectors in combination with fire alarms. Known in the art is also the use of a heat sensors. The problem with the known solutions is that they do not prevent the fires, as if there is smoke to be detected the fire has already ignited and burning. Especially in combination with a remote-control system where the sauna can be switched on remotely, traditional fire prevention systems are not suitable. In this case, a system of actually preventing the fire from igniting is crucial.

### Brief description of the invention

The object of the present invention is to provide an improved system for prevention of fires in a sauna where at least one of disadvantages of the prior art is eliminated or at least alleviated. The objects of the present invention are achieved with a system, method and computer program product according to the characterizing portions of the independent claims.

The present invention is directed to a method for prevention of fires in a sauna, the method comprising the steps of monitoring a rise of heat radiation from a sauna heater, comparing the rise of the heat radiation to a normal set heat radiation rise curve, determining whether the rise of the heat radiation of the sauna heater deviates from a normal rise in heat radiation and switching the sauna heater off if the rise of the heat radiation deviates from a normal rise.

The invention is further directed to a system prevention of fires in a sauna, comprising means for carrying out said method.

The preferred embodiments of the invention are disclosed in the dependent claims.

### Brief description of the figures

In the following the invention will be described in greater detail, in connection with preferred embodiments, with reference to the attached drawings, in which
Figure 1 illustrates steps of the method for prevention of fire in a sauna.
Figure 2 illustrates a system for preventing fires.
Figure 3 illustrates an alternative embodiment of a system for preventing fires.

### Detailed description of some embodiments

The following embodiments are exemplary. Although the specification may refer to "an", "one", or "some" embodiment(s), this does not necessarily mean that each such reference is to the same embodiment(s), or that the feature only applies to a single embodiment. Single features of different embodiments may be combined to provide further embodiments.

In the following, features of the invention will be described with a simple example of a device architecture in which various embodiments of the invention may be implemented. Only elements relevant for illustrating the embodiments are described in detail.

The present invention is directed to a system for prevention of fires in a sauna. Especially if the sauna may be switched on remotely e.g. by an application in a smartphone or pad, or remotely from a control panel not in the immediate vicinity of the sauna heater itself, the user might not be aware of object that may have been left on or too close to the sauna heater. If for example a towel is left carelessly on the sauna heater or has been hanged over the heater to dry, it will rapidly catch fire if the sauna oven is switched on. Even if the temperature and rise of temperature of the sauna is monitored with a heat sensor, the temperature of the sauna rises so slowly that any deviations from a normal situation are so small that they might not be observed before the object catches fire.

The present invention solves this problem by detecting the heat radiation of the sauna heater with a sensor which detects heat radiation. For this purpose, an infrared sensor may be used. The sensor is situated above the sauna heater on the wall or in the ceiling in such a manner that the sensor is directed toward the stones of the sauna heater. The sensor may be integrated with the normal heat sensor of the sauna or be a separate device. The sensor reacts immediately to any heat radiation. In case there are any obstacles between the sauna heater and the sensor, such as on object on the heater, the amount of heat radiation from the sauna heater is substantially less than in a normal case with nothing blocking the heat radiation. In this manner, any objects or the like may be detected relatively fast, in just a matter of minutes. Even 5 minutes or less from switching on the sauna heater or in some cases as fast as 1,5-2 minutes. In this time, the heater will not be hot enough to cause a fire even if blocked by an object.

If an object or the like is detected and the sauna heater is turned off, the heater enters a state where it cannot be switched on again. According to one embodiment of the invention the heater may be switched on again after a period of time, for example 15- 30 minutes or an hour. According to another embodiment the sauna heater may not be switched on again until the user has reset the sauna heater locally. This may e.g. be done by pressing a button at the sauna heater itself or by giving of a command to the control logics of the sauna heater.

According to a preferred embodiment the heat radiation sensor can also be utilized at any time when the sauna heater is heating up, not just at the beginning of the heating process. If a sudden drop of heat radiation is detected while the heating elements of the sauna heater are on, this is likely due to an object falling on the sauna heater and blocking the heater. In this case, the heater may also be switched off.

According to yet a preferred embodiment of the invention the heat radiation sensor can be used also when the sauna is already heated but when the heating elements are already turned off. In this case, an alarm is used to alert the user that something is blocking the sauna heater which might cause a fire.

The control logic of the sauna heater may comprise a normal set heat radiation curve specific for the sauna heater in question. When the sauna heater is switched on the heat radiation from the sauna heater is detected and monitored. If the radiation of the sauna heater does not comply with the set heat radiation curve, i.e. does not rise as fast as the set curve the sauna heater is switched off by the control logic of the sauna heater.

According to an alternative embodiment the heat radiation may be measured at certain points, i.e. at set times from the point in time when the sauna heater has been switched on. If at some point in time the heat radiation is below a set limit, the sauna heater is switched off. Also, if the heat radiation from the sauna heater during the time the sauna is heated or the heater is on, suddenly drops the sauna heater is switched off.

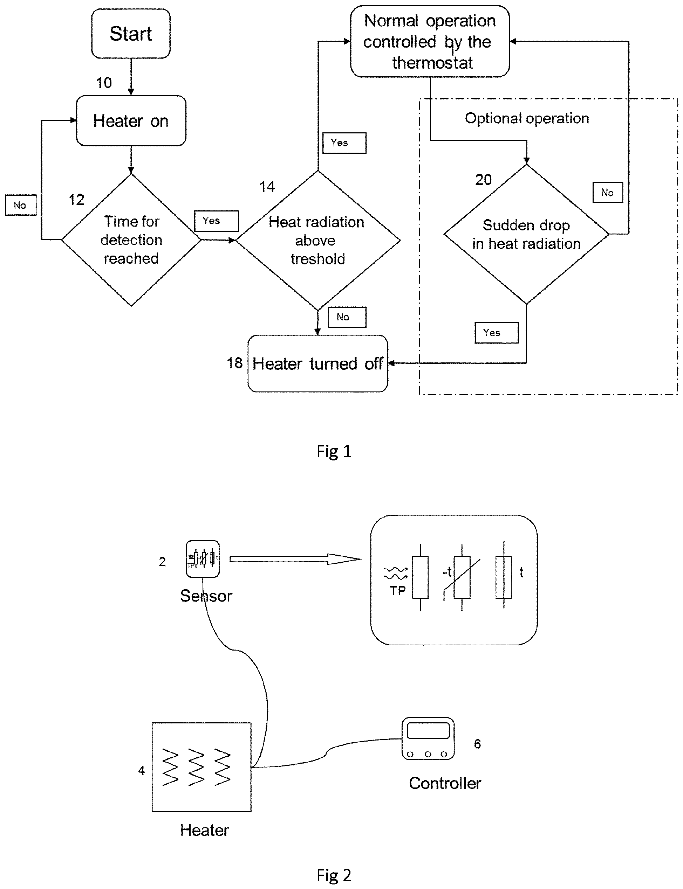

According to a preferred embodiment a thermopile-infrared sensor may be used. In this case, the sensor measures the difference in heat radiation between itself and a visible object, such as the sauna heater. The sensor comprises a thermocouple, which generates an output voltage proportional to a local temperature difference between a target, in this case the sauna heater or the radiation from the sauna heater, and a reference. The reference is the radiation caused by the temperature of the sensor itself. Due to this the thermopile-sensor may also include a NTC-sensor, for determining the absolute temperature of the sensor. Alternatively, the temperature of the sensor is determined by the same sensor that is used for determining the temperature of the sauna itself. Preferably the temperature sensor is then placed in the same casing as the thermopile sensor in order to give a reading which is as accurate as possible. When measuring the heat radiation, the temperature may thus also always be measured. The output voltage is to some extent affected by the temperature of the sensor itself, but generally the impact is relatively small, about -0,1%/°Celsius. In other words, when the temperature rises the generated voltage decreases, but only very slightly. Figure 1 describes the method as a flow diagram. In step 10 it is detected whether the sauna heater is on or not. If it is not turned on this step will be repeated later. If the sauna heater is on, it will in step 12 be checked whether a time for detection has been reached. At step 14 the rise of heat radiation is compared to the normal set value or radiation rise curve. If the radiation is above the set value or radiation rise curve, the normal operation controlled by the thermostat will continue at step 16. If the heat radiation is below the normal set value or radiation rise curve the sauna heater is switched off at step 18. According to one embodiment if a sudden drop in heat radiation is detected, step 20, during normal operation, the sauna heater will be switched off.

Figure 2 describes the system according to one embodiment, comprising a sauna heater 2, a radiation sensor 4, and a controller 6.

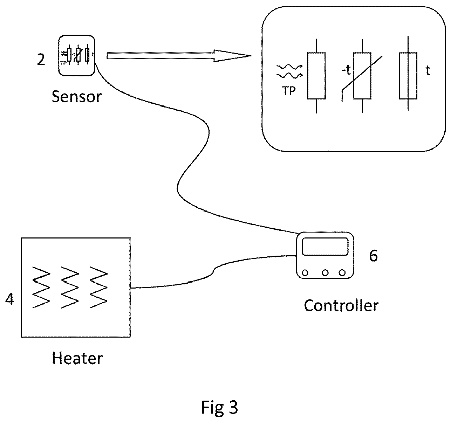

Figure 3 describes the system according to an alternative embodiment wherein the sensor is connected to the controller instead of the heater.

The control logics may be comprised in the sauna heater or be comprised in a separate control unit from which the sauna heater may be controlled or be a separate protection device that can be used in an existing sauna and sauna heater. In case the control logics is comprised in the heater the control logics may be controlled by traditional control knobs on the heater. Alternatively, the means for controlling the control logics may be a remote panel or the like or any other suitable user interface.

According to one embodiment of the invention the user interface for controlling the sauna heater may be a mobile phone, a tablet, or the like.

It is apparent to a person skilled in the art that as technology advances, the basic idea of the invention can be implemented in various ways. The invention and its embodiments are therefore not restricted to the above examples, but they may vary within the scope of the claims.

## Claims

1. Method for fire prevention in a sauna comprising the steps of; monitoring a rise of heat radiation from a sauna heater; comparing the rise of the heat radiation to a normal set heat radiation rise curve or set heat radiation value;
determining whether the rise of the heat radiation of the sauna heater deviates from a normal rise in heat radiation; and switching the sauna heater off if the rise of the heat radiation deviates from the normal rise.

2. The method according to claim 1, wherein the step of switching off is fulfilled if the rise of the heat radiation is lower than the normal rise.

3. The method according to claim 1, wherein rise of the heat radiation is monitored for up to 5 minutes before the comparison to the rise curve or set value is performed.

4. The method according to claim 1, wherein rise of the heat radiation is monitored for 1,5 to 2 minutes before the comparison to the rise curve or set value is performed.

5. The method according to claim 1, wherein rise of the heat radiation is monitored during the whole time the sauna heater is being switched on.

6. The method according to claim 7, wherein the sauna heater is switched off if a sudden fall in the heat radiation from the sauna heater is detected.

7. The method according to claim 1, wherein the sauna heater is prevented from being switched on again for a period of time after it has been switched off due to a deviation in the heat radiation rise curve.

8. The method according to claim 1, wherein the sauna heater is prevented from being switched on again after it has been switched off due to a deviation in the heat radiation rise curve until a user resets the sauna heater locally.

9. System for preventing fires in a sauna comprising;
means for monitoring a rise of heat radiation from a sauna heater;
means for comparing the rise of the heat radiation to a normal set heat radiation rise curve or a preset heat radiation value; means for determining whether the rise of the heat radiation of the sauna heater deviates from a normal rise in heat radiation; and
means for switching the sauna heater off if the rise of the heat radiation deviates from the normal rise.

10. The system according to claim 9 wherein the means for sensing heat radiation is an infrared radiation sensor.

11. The system according to claim 10 wherein the infrared radiation sensor is a thermopile-infrared sensor.

12. The system according to claim 9 wherein the means for comparing, determining and switching off is the control electronics of the sauna heater.

13. The system according to claim 9 wherein the control electronics are comprised in the sauna heater.

14. The system according to claim 9 wherein the control electronics are separate from the sauna heater.

15. The system according to claim 9 wherein the means for monitoring, comparing and determining are included in a separate protection device.

16. Computer program product adapted to perform the steps of the method of claims 1-8.
